# EUROPEAN PATENT SPECIFICATION

(11) **EP 4 359 254 B1**
(45) Date of publication and mention of the grant of the patent: **27.08.2025**
(21) Application number: 22734310.0
(22) Date of filing: 21.06.2022
(51) Int. Cl.: B60N 2/28

(54) **SAFETY SEAT**
SICHERHEITSSITZ
SIÈGE DE SÉCURITÉ

(30) Priority: 21.06.2021 CN 202110686926
(43) Date of publication of application: 01.05.2024
(60) Divisional application: 25190315.9
(73) Proprietor: Wonderland Switzerland AG, 6312 Steinhausen (CH)
(72) Inventor: GUO, Zhengwen, Dongguan, Guangdong 523648 (CN); MO, Xiaolong, Dongguan, Guangdong 523648 (CN)
(74) Representative: Pfenning, Meinig & Partner mbB
(86) International application number: PCT/EP2022/066867
(87) International publication number: WO 2022/268804

(56) References cited:
- CN-A- 111 923 795
- CN-U- 209 756 863
- CN-U- 213 413 570
- DE-A1- 102017 203 726
- DE-U1- 202013 103 194
- GB-A- 2 492 201

## Description

### TECHNICAL FIELD

The invention relates to baby products, and more specifically to a safety seat which can provide multiple using modes.

### BACKGROUND

Safety seat is one of the necessary baby products for parents with infants and babies at home when they drive out. When a family has young children and older children at the same time, the user needs to buy a plurality of safety seats for different children to use, producing a huge expenditure, and when the children gradually grow, the safety seats with a supporting foot have to be abandoned because they are no longer suitable for the older children, which also causes waste of resources. Related prior art can be found, e.g., in document DE 20 2013 103194 U1.

### SUMMARY

One of objects of the invention is to provide a safety seat providing multiple using modes.

In order to achieve the above object, the invention discloses a safety seat including a base, a body, and a supporting foot. The base includes fixing portion, and the base is selectively fixed to a car seat through the fixing portion; the body is assembled on the base; the supporting foot is slidably and pivotably connected to the base, and the supporting foot and the fixing portion are arranged on opposite sides of the base, respectively.

Preferably, the safety seat further includes a sliding member, wherein the sliding member is slidably disposed on the base, and the supporting foot is pivotally connected to the sliding member.

Preferably, the safety seat further includes a latching member, wherein the latching member is pivotally connected to or slidably disposed on the base, the sliding member includes a positioning portion, and the latching member is selectively clamped to the positioning portion.

Preferably, the sliding member is slidable in respect to the base along a longitudinal direction, the supporting foot is pivotally connected to a front end of the sliding member in the longitudinal direction, and the latching member and the positioning portion are arranged at a rear end of the sliding member in the longitudinal direction.

Preferably, the supporting foot includes an unlatching portion, and the latching member is arranged on a pivoting path of the unlatching portion.

Preferably, the safety seat further includes a resilient member for latching, and the resilient member for latching is arranged between the latching member and the base.

Preferably, the sliding member is slidable in respect to the base along a longitudinal direction, the base includes a stopping portion, and a sum of a length of the stopping portion in the longitudinal direction and a length of the supporting foot is greater than a length of the base in the longitudinal direction.

Preferably, the safety seat further includes a protective member, wherein the protective member is pivotably connected to sliding member and arranged between the supporting foot and the sliding member.

Preferably, the base includes at least one limiting member, the sliding member is formed with at least one sliding slot, and the limiting member is slidably disposed in the sliding slot.

Preferably, the sliding member is formed with an opening, and a part of the supporting foot is selectively accommodated in the sliding member through the opening.

Preferably, the base further includes brackets, and the sliding member is slidably disposed on the brackets.

Preferably, the safety seat further includes an auxiliary resilient member, wherein the auxiliary resilient member is connected to the base and the sliding member, and extension directions of the auxiliary resilient member is parallel to extension directions of the bracket.

Preferably, the safety seat further includes a stopping member, and the stopping member is slidably disposed on the sliding member and selectively abuts against the bracket.

Preferably, the safety seat further includes a resilient member for stopping, and the resilient member for stopping is connected to the sliding member and the stopping member.

Preferably, the safety seat further includes a reinforcement member, and the reinforcement member is arranged between the bracket and the sliding member.

Preferably, the safety seat further includes a positioning lock, wherein the positioning lock is arranged on the base and includes a locking portion, the supporting foot has a locked portion, and the locking portion and the locked portion are selectively clamped to each other.

Preferably, at least one of the locking portion and the locked portion is formed with a guiding portion, and the locking portion and the locked portion are abutted against and latched to each other through the guiding portion.

Preferably, the base includes an accommodating seat, wherein notches are formed on the accommodating seat, the positioning lock is arranged in the accommodating seat and is further formed with a positioning protrusion, and the positioning protrusion is selectively latched to the notches.

Preferably, the positioning protrusion is an elastic body.

Preferably, the safety seat further includes a positioning portion, wherein the positioning portion is arranged on the sliding member, when the sliding member slides in respect to the base to an unfolded position, a gap is formed between the sliding member and the base, and the positioning portion is selectively latched in the gap and abuts against the sliding member and/or the base.

Preferably, the safety seat further includes a resilient member for positioning, and the resilient member for positioning is arranged between the positioning portion and the sliding member.

Preferably, the safety seat further includes a resilient member for pivoting, and the resilient member for pivoting is arranged between the supporting foot and the sliding member.

Preferably, the base is formed with an accommodating space, and at least one part of the supporting foot is selectively received in the accommodating space.

Preferably, the supporting foot includes a sleeve portion and an extending portion, and at least one part of the extending portion is inserted into the sleeve portion.

Preferably, the supporting foot is detachably connected to the base.

Preferably, the safety seat further includes a casing and an auxiliary bracket, the casing is arranged on an outer side of the base, the supporting foot is pivotally connected to the casing, the auxiliary bracket is slidably disposed on the base and connected to the casing, the auxiliary bracket includes an operating member for latching, the base is formed with a latching hole, and the operating member for latching is selectively latched to the latching hole.

Preferably, the safety seat further includes a shielding member, the base is further formed with an opening, the auxiliary bracket is inserted into the opening, and the shielding member is pivotably connected to the base and adjacent to the opening.

The invention will become clearer from the following description in conjunction with the accompanying drawings, which are used to explain embodiments of the invention.

### BRIEF DESCRIPTION OF THE DRAWINGS

Fig. 1 is a schematic perspective view of a safety seat according to a first embodiment of the invention in an unfolded state.
Fig. 2 is a schematic right-side view of Fig. 1.
Fig. 3 is a schematic right-side view of the safety seat in Fig. 1 when fixing portion is unfolded.
Fig. 4 is a schematic right-side view of the safety seat in Fig. 1 when both of the fixing portion and a supporting foot are fully unfolded.
Fig. 5 is a schematic right-side view of the safety seat in Fig. 1 when a body is assembled on the base in another direction.
Fig. 6 is a schematic right-side view of the safety seat in Fig. 1 in a folded state.
Fig. 7 is a schematic perspective view of the safety seat in Fig. 1 in another angle.
Fig. 8 is schematic sectional view of Fig. 7 along X-X section.
Fig. 9 is a schematic view of the safety seat in Fig. 8 when the supporting foot is in a folded process.
Fig. 10 is a schematic view of the safety seat in Fig. 8 when the supporting foot is fully folded.
Fig. 11 is a schematic perspective view of the safety seat in Fig. 7 when the supporting foot is fully folded.
Fig. 12 is a schematic rear view of a safety seat according to a second embodiment of the invention.
Fig. 13 is schematic sectional view of Fig. 12 along Y-Y section.
Fig. 14 is schematic sectional view of a safety seat according to a third embodiment of the invention along Y-Y section. Fig. 15 is a schematic bottom view of a safety seat according to a fourth embodiment of the invention.
Fig. 16 is a schematic perspective view of internal components of the safety seat in Fig. 15.
Fig. 17 is a schematic perspective view of another angle of Fig. 16.
Fig. 18 is a schematic perspective view of a stopping member being unlatched from the bracket in Fig. 17.
Fig. 19 is a schematic bottom view of a safety seat according to a fifth embodiment of the invention.
Fig. 20 is a schematic perspective view of a positioning lock in Fig. 19.
Fig. 21 is schematic sectional view of the safety seat in Fig. 19 along Z-Z section when the positioning lock is in a locked state.
Fig. 22 is a partial enlarged schematic view of Fig. 20.
Fig. 23 is schematic sectional view of the safety seat in Fig. 19 along Z-Z section when the positioning lock is in an unlocked state.
Fig. 24 is a partial enlarged schematic view of Fig. 22.
Fig. 25 is a partial enlarged schematic view of Fig. 19.
Fig. 26 is a schematic perspective view of a safety seat according to a sixth embodiment of the invention.
Fig. 27 is a schematic perspective view of a base and a body of the safety seat in Fig. 26.
Fig. 28 is a schematic perspective view of the supporting foot, the casing, and the auxiliary bracket of the safety seat in Fig. 26.
Fig. 29 is a partial enlarged schematic view of Fig. 28.
Fig. 30 is a schematic right-side sectional view of the safety seat in Fig. 26.
Fig. 31 is a partial enlarged schematic view of the safety seat in Fig. 30 when the auxiliary bracket is in a latched position.
Fig. 32 is a schematic view of the safety seat in Fig. 31 when the auxiliary bracket is unlatched from the base.
Fig. 33 is a schematic perspective view of the safety seat in Fig. 27 when a shielding member is moved to a shielding position.
Fig. 34 is a schematic view of internal components of the safety seat in Fig. 33.
Fig. 35 is a schematic perspective view of some components of a safety seat according to a seventh embodiment of the invention.
Fig. 36 is a schematic right-side sectional view of Fig. 35.

### DETAILED DESCRIPTION

Now embodiments of the invention will be described with reference to the accompanying drawings, in which like reference signs represent like components.

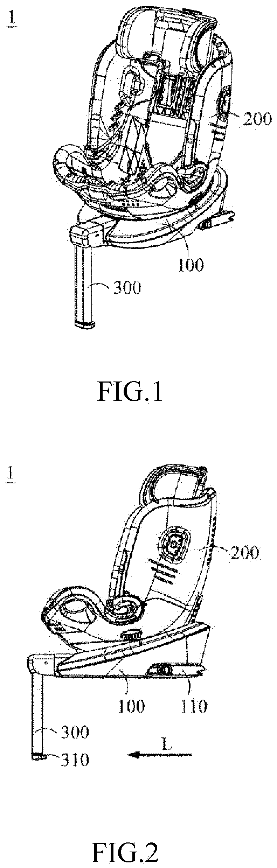

Please refer to Figs. 1 and 2, in which Fig. 1 is a schematic perspective view of a safety seat according to a first embodiment of the invention in an unfolded state, and Fig. 2 is a schematic right-side view of Fig. 1. The safety seat 1 in this embodiment is suitable for carrying infants, and the safety seat 1 includes a base 100, a body 200, and a supporting foot 300. Among them, the base 100 includes fixing portion 110, the body 200 is assembled on the base 100, the supporting foot 300 is slidably and pivotably connected to the base 100, and the supporting foot 300 and the fixing portion 110 are arranged on opposite sides of the base 100 respectively along a longitudinal direction L.

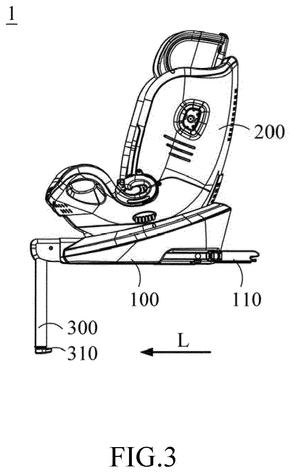

Please also refer to Fig. 3, which is a schematic right-side view of the safety seat in Fig. 1 when the fixing portion is unfolded. In detail, the safety seat 1 is suitable for being installed on a car seat, wherein bottoms of the base 100 on both of left and right sides are respectively provided with slide rails extending along the longitudinal direction L, and each of the fixing portion 110 is, for example, a hollow component corresponding to a shape of a fixing member of the car seat. In this embodiment, a number of the fixing portion 110 is two, and the two fixing portion 110 are slidably disposed on the slide rails on the left and right sides respectively. Thus, the user can assemble the fixing portion 110 on the fixing member of the car seat, so as to fix the safety seat 1. After use, the user only needs to unlatch the fixing portion 110 from the fixing member to detach the safety seat 1 from a car. In other words, the base 100 of the safety seat 1 can be selectively fixed to the car seat through the fixing portion 110.

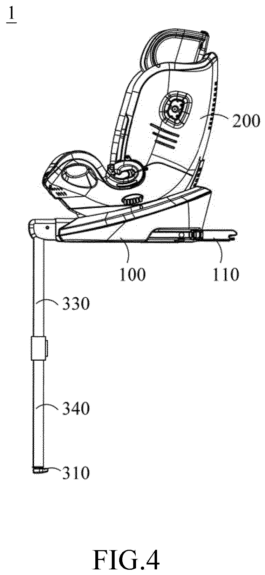

Please refer to Figs. 2 and 4, in which Fig. 4 is a schematic right-side view of the safety seat in Fig. 1 when both of the fixing portion and the supporting foot are fully unfolded. Preferably, the supporting foot 300 includes a supporting portion 310, a sleeve portion 330, and an extending portion 340. Among them, the supporting portion 310 is arranged at an end of the supporting foot 300, and at least one part of the extending portion 340 is inserted into the sleeve portion 330. The supporting portion 310 can be extended and retracted along an extension direction of the supporting foot 300. The user can insert the extending portion 340 into the sleeve portion 330 or extend the extending portion 340 from the sleeve portion 330, and the supporting portion 310 can abut against a rear seat pedal of the car, such that the safety seat 1 can be stably fixed to the car seat.

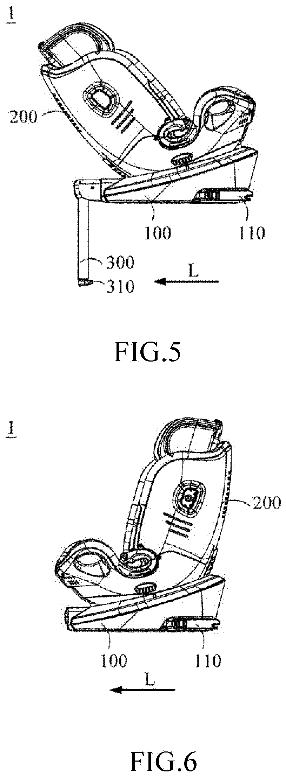

In addition, the body 200 in this embodiment can be assembled on the base 100 in different manners. Please refer to Fig. 5, which is a schematic right-side view of the safety seat in Fig. 1 when the body is arranged on the base in another direction. Specifically, the base 100 is formed with a plurality of holes for assembling in the longitudinal direction L, and the body 200 has a convex column at a bottom corresponding to shapes of the holes. When the passenger is an older child, the user can unlatch the convex column of the body 200 from the holes of the base 100, and rotate the body 200 such that the convex column is engaged with another hole, so as to re-install the body 200 on the base 100 in a direction opposite to the original assembling direction. In Preferably, the contact surface between the base 100 and the body 200 is an arc surface and forms a limiting groove, and when the body 200 is assembled on the base 100, a small range of sliding can be performed along the limiting groove in the longitudinal direction L in order to adjust a sitting angle. Since this part is not the core technology focus of this application, it will not be redundantly described here.

Please refer to Fig. 6, which is a schematic right-side view of the safety seat in Fig. 1 in a folded state. The safety seat 1 in this embodiment can be switched between the unfolded state and the folded state. When the child needs to use the safety seat 1, the user can unfold the supporting foot in respect to the base 100 as shown in Figs. 1 to 5; and when the safety seat 1 is to be stored after being used, the supporting foot 300 can be folded in respect to the base 100 as shown in Fig. 6. Thus, not only an overall volume occupied by the safety seat 1 can be reduced, but also size-related specifications of the safety seat 1 can be met, so it is more convenient to use.

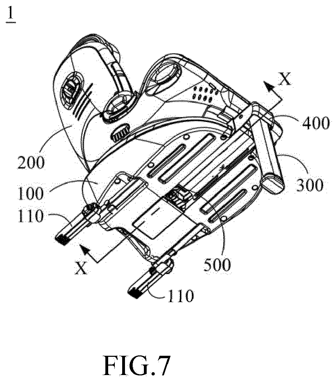

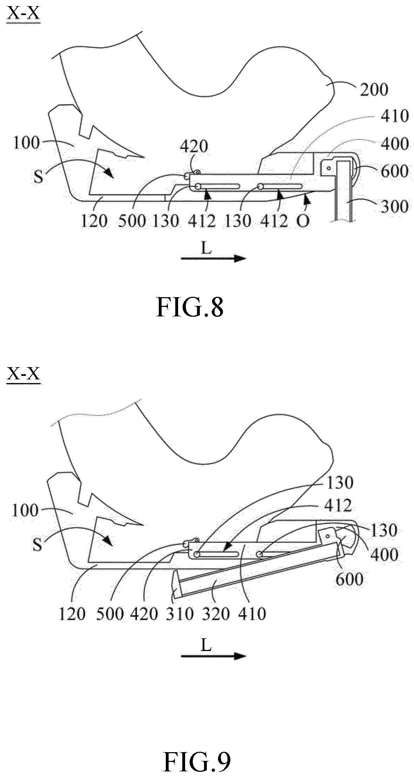

How the supporting foot 300 is folded in respect to the base 100 will be described in detail as below. Please refer to Figs. 7 and 8, in which Fig. 7 is a schematic perspective view of the safety seat in Fig. 1 in another angle, and Fig. 8 is schematic sectional view of Fig. 7 along X-X section. As shown, the safety seat 1 in this embodiment further includes a sliding member 400, and the sliding member 400 is slidably disposed on a bottom of the base 100, and the supporting foot 300 is pivotally connected to the sliding member 400. In detail, the base 100 is formed with an accommodating space S at the bottom, and at least one part of the supporting foot 300 and the sliding member 400 are selectively received in the accommodating space S. Further, the sliding member 400 includes a body portion 410, and an opening O is formed on the body portion 410, and a part of the supporting foot 300 is selectively accommodated in the sliding member 400 through the opening O. Thus, when the user needs to use the supporting foot 300 of the safety seat 1, the sliding member 400 can be slid out of the accommodating space S in respect to the base 100, and the supporting foot 300 can be pivoted to the unfolded state as shown in Fig. 1 in respect to the sliding member 400; and when the user does not need to use the supporting foot 300, the supporting foot 300 can be turned into the sliding member 400 through the opening O, and the sliding member 400 can be slid into the accommodating space S, so as to form the folded state as shown in Fig. 6.

Further, in order to prevent the sliding member 400 from being retracted into the accommodating space S due to the pushing of inner sides of the legs of the infant in the unfolded state, preferably, the safety seat 1 further includes a latching member 500, and the latching member 500 is pivotally connected to the base 100, and the sliding member 400 further includes a positioning portion 420, and the latching member 500 is selectively latched to the positioning portion 420. As shown in Fig. 8, the sliding member 400 may slide in respect to the base 100 along the longitudinal direction L, and the supporting foot 300 is pivotally connected to a front end of the sliding member 400 in the longitudinal direction L, and the latching member 500 and the positioning portion 420 are arranged at a rear end of the sliding member 400 in the longitudinal direction L. Thusly, when the sliding member 400 slides out in respect to the base 100 and the supporting foot 300 is unfolded in respect to the base 100, the latching member 500 will be latched with the positioning portion 420 at the rear end of the sliding member 400 in the longitudinal direction L, and fix the sliding member 400 at a position of the unfolded state. Preferably, the base further includes at least one limiting member 130, and the limiting member 130 is, for example, a positioning pin or a convex column, and the body portion 410 of the sliding member 400 is formed with at least one sliding slot 412. Number and position of the sliding slot 412 are corresponding to those of the limiting member 130, and the limiting member 130 is slidably disposed in the sliding slot 412, thereby guiding sliding direction of the sliding member 400 and limiting a sliding stroke.

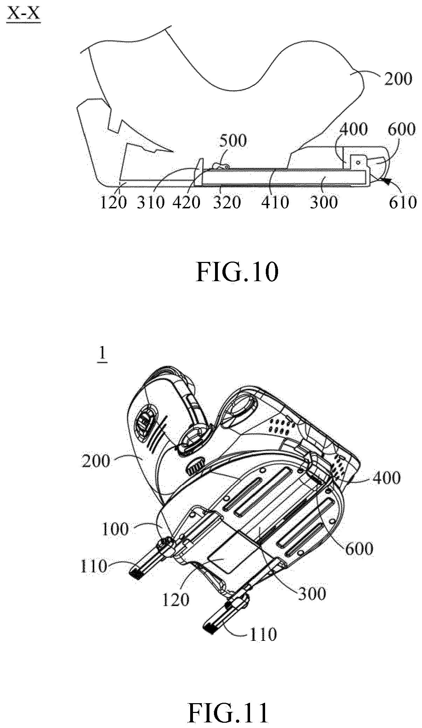

In addition, the safety seat 1 in this embodiment also has a function of automatically unlatching the sliding member 400 when the supporting foot 300 is folded in respect to the base 100. Please refer to Figs. 9 and 10, in which Fig. 9 is a schematic view of the safety seat in Fig. 8 when the supporting foot is in a folded process, and Fig. 10 is a schematic view of the safety seat in Fig. 8 when the supporting foot is fully folded. As shown, the supporting foot 300 further includes an unlatching portion 320, and the unlatching portion 320 is, for example, an annular flange located on an outer periphery of the supporting foot 300, and the latching member 500 is arranged on a pivoting path of the unlatching portion 320. With such arrangement, when the supporting foot 300 passes through the position in Fig. 9 in a clockwise direction from the position in the unfolded state shown in Fig. 8 and is finally turned into the body portion 410 of the sliding member 400, the unlatching portion 320 will abut against the latching member 500, causing the latching member 500 to temporarily deviate from the rear end of the positioning portion 420 in the longitudinal direction L, so that the latching member 500 and the sliding member 400 are no longer latched to each other, and the sliding member 400 can be slid into the accommodating space S. It would be noted, in other possible embodiments, the unlatching portion 320 can also be integrated with the supporting portion 310, that is, when the supporting foot 300 is turned into the sliding member 400, unlatching will be performed by the supporting portion 310 abutting against the latching member 500, and a same effect can be achieved as well.

It would be noted, in order to prevent the user's fingers and other parts from being pinched by the supporting foot 300 and the sliding member 400 when the supporting foot 300 is turned into the sliding member 400, preferably, the safety seat 1 further includes a protective member 600, and the protective member 600 is, for example, an arc-shaped hollow casing having an arc surface 610, and is pivotally connected to the sliding member 400 and is arranged between the supporting foot 300 and the sliding member 400. Thus, when the supporting foot 300 is turned into the sliding member 400 in the clockwise direction, the protective member 600 will be pivoted to a gap between the supporting foot 300 and the sliding member 400 along an inner edge of the sliding member 400 due to the action of gravity, so as to prevent the user's fingers and other parts from being pinched when protruding into the gap. Moreover, when the supporting foot 300 is turned out from the sliding member 400, an upper end of the supporting foot 300 (an end in respect to the supporting portion 310) will automatically push the protective member 600 back to the position shown in Figs. 8 and 9.

On the other hand, in this embodiment, the base 100 further includes a stopping portion 120, and the stopping portion 120 is, for example, a baffle plate and is arranged at the rear end of the base 100 in the longitudinal direction L, and a distance from the front end of the supporting foot 300 to the rear end of the base 100 is, for example, between 365 mm and 535 mm, moreover, when the supporting foot 300 is folded, a distance from the bottom of the base 100 to the top of the body 200 is, for example, between 715 mm and 752 mm, and a height of the base 100 is, for example, between 155 mm and 325 mm. with such sizes, the safety seat 1 is suitable for use in various passenger cars. On the other hand, when the safety seat 1 is in the folded state, one end of the supporting foot 300 close to the supporting portion 310 and the unlatching portion 320 will be blocked by the stopping portion 120 and will not be pivoted in respect to the base 100, so that the safety seat 1 may be maintained in the folded state and the bottom of the base 100 is maintained flat.

A complete description of the operation process of the safety seat 1 will be given below. Please refer to Figs. 7 to 11 together, in which Fig. 11 is a schematic perspective view of the safety seat in Fig. 7 when the supporting foot is fully folded. Firstly, when the safety seat 1 is in the unfolded state, the positioning portion 420 at the rear end of the sliding member 400 in the longitudinal direction L is limited by the latching member 500, and thus maintained at a position protruding in respect to the base 100. When the user wants to fold the safety seat 1, the supporting foot 300 can be turned into the sliding member 400. At this time, the unlatching portion 320 may abut against the latching member 500 such that it is deviated from the rear end of the sliding member 400 in the longitudinal direction L and will no longer be latched with the sliding member 400 to each other. At this time, the user can further slide the supporting foot 300 receiving the sliding member 400 into the accommodating space S along a direction opposite to the longitudinal direction L, until the limiting member 130 abuts against the front end of the sliding slot 412 in the longitudinal direction L, and at the same time, one end of the supporting foot 300 close to the supporting portion 310 is blocked by the stopping portion 120 and left in the accommodating space S, forming a state as shown in Fig. 11.

When the user wants to unfold the supporting foot 300 in respect to the base 100 again, it is only needed to slide the sliding member 400 in respect to the base 100 along the longitudinal direction L, and turn out the supporting foot 300 from the body portion 410. At this time, the latching member 500 is again pivoted to the rear end of the positioning portion 420 in the longitudinal direction L because the latching member 500 is no longer abutted against by the unlatching portion 320 and the body portion 410, such that the supporting foot 300 and the sliding member 400 are maintained in the position of the unfolded state.

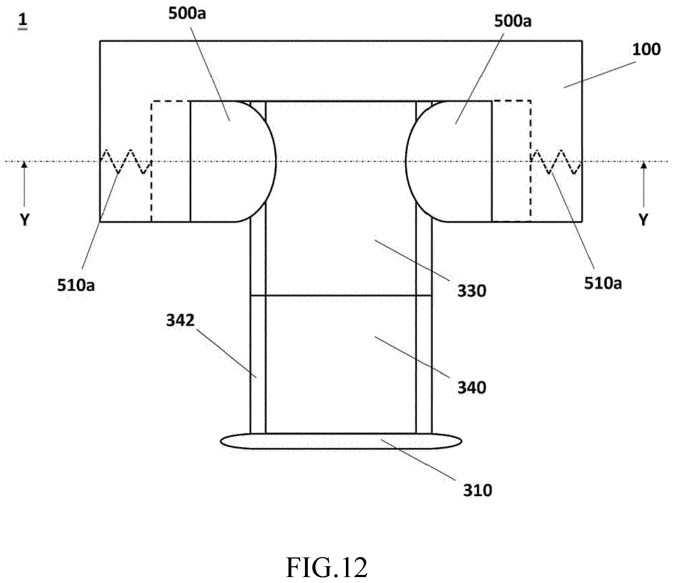

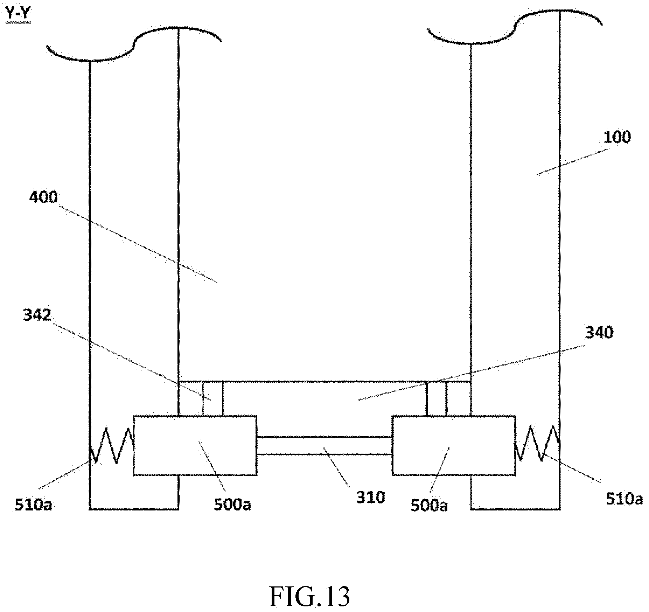

Please refer to Figs. 12 and 13, in which Fig. 12 is a schematic rear view of a safety seat according to a second embodiment of the invention, and Fig. 13 is schematic sectional view of Fig. 12 along Y-Y section. The safety seat 1 in this embodiment is similar to the safety seat 1 in the first embodiment, and the main difference between them is that the latching members 500a in this embodiment are slidably disposed on the base 100.

In detail, the latching members 500a in this embodimenthas, for example, two, and the two latching members 500a are respectively arranged on both of left and right sides of the sliding member 400. Furthermore, the safety seat 1 further includes resilient member for latching 510a, and the resilient member for latching 510a is, for example, linear spring and is arranged between the latching member 500a and the base 100. When the supporting foot 300 is folded in respect to the sliding member 400, a part of the supporting foot 300 may abut against the latching members 500a such that the latching members 500a are respectively retracted toward both of left and right sides of the base 100 to positions shown by dotted lines in Fig. 12, and do not continue to block the sliding member 400. In addition, during the retracting process of the latching members 500a, the resilient member for latching 510a may be deformed at the same time and accumulate elastic force. Therefore, when the supporting foot 300 is turned out from the sliding member 400 again, the latching members 500a can be reset immediately and limit the sliding member 400 to an unfolded position.

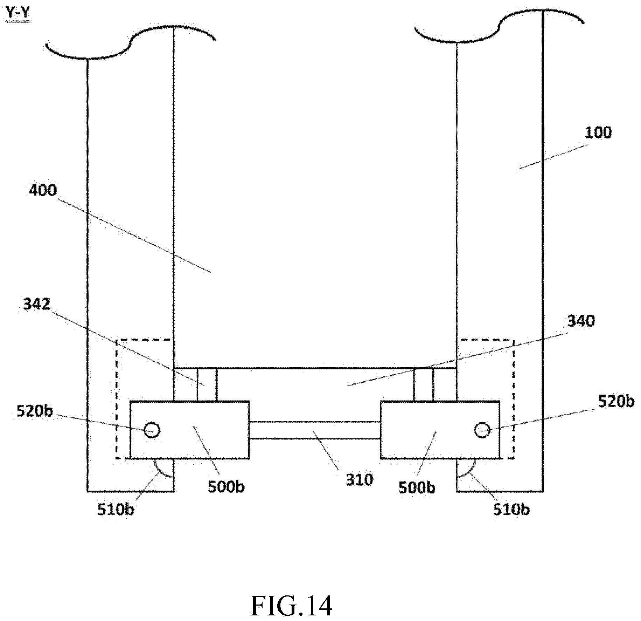

Please refer to Fig. 14, which is schematic sectional view of a safety seat according to a third embodiment of the invention along Y-Y section. The safety seat 1 in this embodiment is similar to the safety seat 1 in the second embodiment, and the main difference between them is that the latching members 500b in this embodiment are pivotally connected to the base 100, and pivoting direction of the latching member 500b is parallel to the bottom surface of the base 100.

In detail, the latching member 500b in this embodiment is pivotally connected to the base 100 respectively by pivot 520b, such that the latching member 500b can rotate in respect to the base 100. Furthermore, The safety seat 1 in this embodiment further includes resilient member for latching 510b, and the resilient member for latching 510b is, for example, torsion spring, which can be deformed when the latching members 500b are pivoted to the positions shown by the dotted lines in Fig. 14 and accumulate elasticity. With such arrangement, same effect as that of the safety seat 1 in the second embodiment can also be achieved.

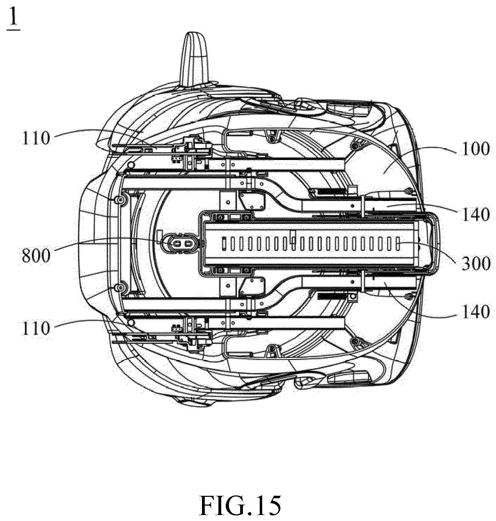

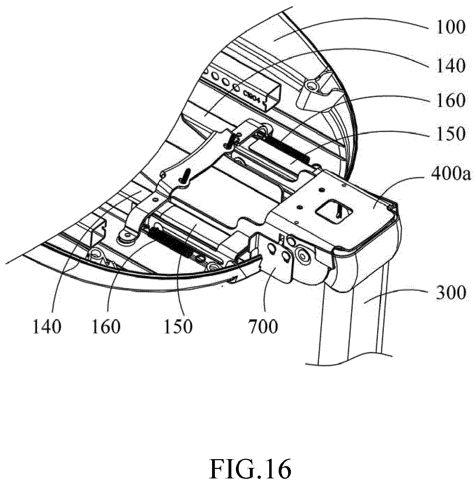

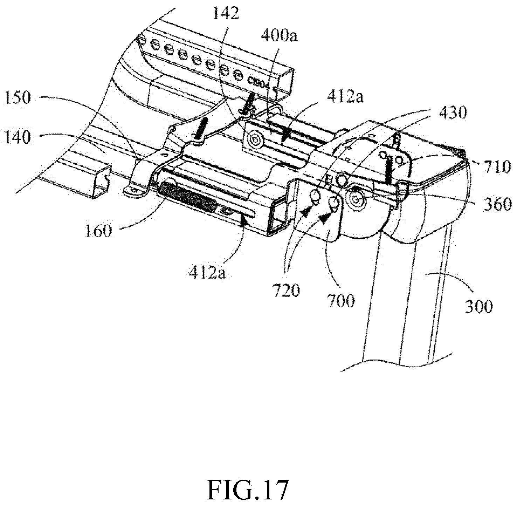

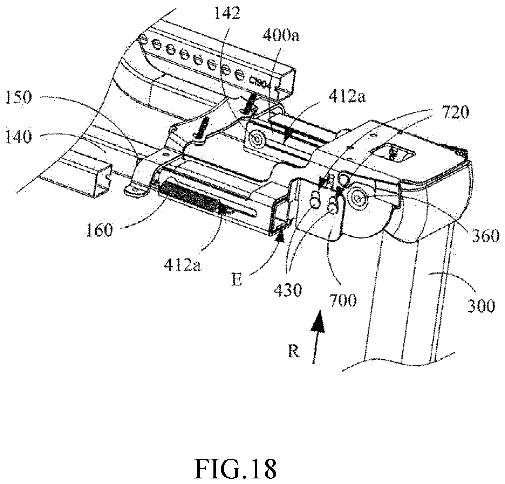

Please refer to Figs. 15 to 18, in which Fig. 15 is a schematic bottom view of a safety seat according to a fourth embodiment of the invention, Fig. 16 is a schematic perspective view of internal components of the safety seat in Fig. 15, Fig. 17 is a schematic perspective view of another angle of Fig. 16, and Fig. 18 is a schematic perspective view of a stopping member being unlatched from a bracket in Fig. 17. The safety seat 1 in this embodiment is approximately as same as the safety seat 1 in the first embodiment, and the main difference between them is that the safety seat 1 in this embodiment further includes a positioning lock 800, and the base 100 further includes brackets 140, and a sliding member 400a is slidably disposed on the brackets 140.

In detail, in order to improve the convenience for the user to pull out and unfold the supporting foot 300 from the base 100, the safety seat 1 in this embodiment limits the supporting foot 300 to the locked state by the positioning lock 800, and when the positioning lock 800 releases the locked state of the supporting foot 300, the supporting foot 300 can be automatically slid to the unlatched position by the sliding member 400a and be pivoted and unfolded to a use state. As shown in Figs. 15 and 16, the number of the bracket 140 in this embodiment is, for example, two, and the two brackets 140 are fixed on the base 100, and the sliding member 400a can slide along extension portions of the brackets 140 close to the front end of the safety seat 1. Preferably, the brackets 140 and the sliding member 400a each is made of a material selected from metals, and in order to improve the support strength provided by the brackets 140 and the sliding member 400a when the supporting foot 300 is in use, the safety seat 1 further includes reinforcement member 150, and the reinforcement member 150 is, for example, extruded aluminum members cooperating the shapes of the brackets 140, and is arranged between the bracket 140 and the sliding member 400a, so as to prevent the supporting foot 300 from causing the sliding member 400a to wear the brackets 140 or fall off from the brackets 140 due to repeated use.

In addition, in order to achieve the automatic sliding function of the supporting foot 300 mentioned as above, the supporting foot 300 in this embodiment is pivotally connected on the sliding member 400a through a pivot 360, and the safety seat 1 further includes auxiliary resilient members 160, and each of the auxiliary resilient members 160 is, for example, a linear spring with one end connected to the base 100 and the other end is connected to the sliding member 400a, and extension direction of the auxiliary resilient member 160 is parallel to the extension direction of the bracket 140 (i.e., the longitudinal direction L). Thus, when the supporting foot 300 is locked by the positioning lock 800, the auxiliary resilient member 160 is in an extended state and accumulate elastic force, and when the positioning lock 800 unlocks the supporting foot 300, the auxiliary resilient member 160 brings the sliding member 400a to slide along the extending direction of the bracket 140 to the unfolded position by the accumulated elastic force, such that the supporting foot 300 is rotated in respect to the pivot 360 to an unfolded state by its own weight.

As shown in Fig. 17, preferably, a limiting pin 142 is arranged on the brackets 140, a sliding slot 412a is arranged on the sliding member 400a, and the limiting pin 142 is slidably disposed in sliding slot 412a. With such arrangement, the sliding stroke of the sliding member 400a can be restricted, so as to prevent the sliding member 400a from entirely sliding out of the brackets 140 due to the elastic force of the auxiliary resilient members 160. Furthermore, in order to prevent the sliding member 400a from sliding in again along the brackets 140 during use, preferably, the safety seat 1 further includes a stopping member 700, and the stopping member 700 is slidably disposed on the sliding member 400a and selectively abuts against the bracket 140.

Specifically, the safety seat 1 further includes a resilient member for stopping 710, and the resilient member for stopping 710 is, for example, a linear spring and is connected to the sliding member 400a and the stopping member 700. On the other hand, a limiting pin 430 is arranged on the sliding member 4004, a long hole 720 is formed on the stopping member 700, and the limiting pin 430 is slidably disposed in the long hole 720. Thus, when the sliding member 400a is brought by the auxiliary resilient members 160 so that the part on which the stopping member 700 is arranged slides out in respect to the bracket 140, the stopping member 700 may slide down by an elastic force of the resilient member for stopping 710, then abut against the bracket 140 and the front of an end E of the reinforcement members 150, so as to prevent the sliding member 400a from sliding in along the brackets 140 again. If the user wants to receive the supporting foot 300 and the sliding member 400a into the base 100, he only needs to push the stopping member 700 up along an unlatching direction R as shown in Fig. 18, such that the stopping member 700 is no longer abutted against the brackets 140 and the end E of the reinforcement members 150, and then the supporting foot 300 and the sliding member 400a can be pushed in along the brackets 140.

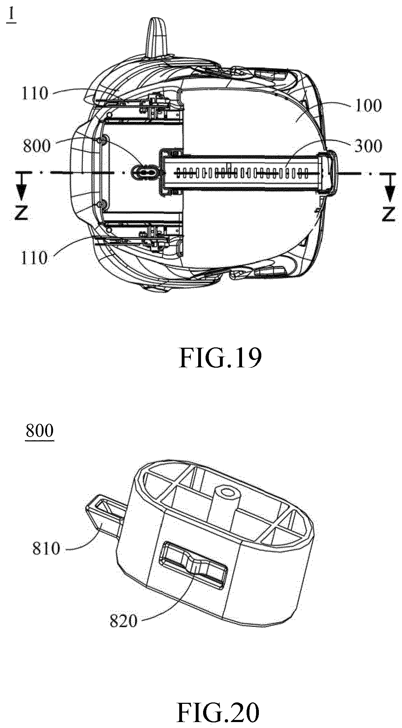

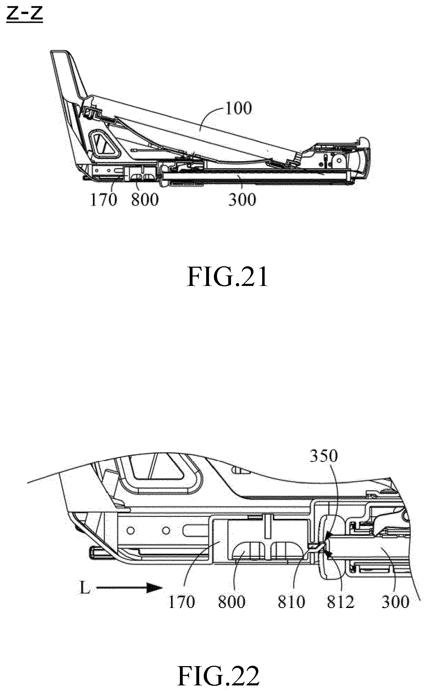

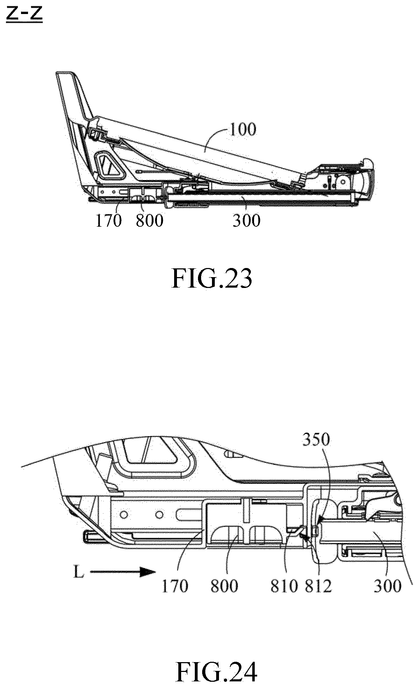

Please refer to Figs. 19 to 24, in which Fig. 19 is a schematic bottom view of a safety seat according to a fifth embodiment of the invention, Fig. 20 is a schematic perspective view of the positioning lock in Fig. 19, Figs. 21 and 23 are schematic sectional views of the safety seat in Fig. 19 along Z-Z section respectively in locked and unlocked states, and Figs. 22 and 24 are partial enlarged schematic views of Figs. 20 and 22, respectively. The safety seat 1 in this embodiment is similar to the safety seat 1 in the fourth embodiment, and the main difference between them that the positioning lock 800 in this embodiment includes a locking portion 810, and the positioning lock 800 and the supporting foot 300 are latched to each other by the locking portion 810, and the supporting foot 300 can be directly pivoted from a folded position to a use position.

As shown ion Figs. 20 to 24, the safety seat 1 further includes a positioning lock 800, and the positioning lock 800 is arranged on the base 100 and includes a locking portion 810, and a bottom end of the supporting foot 300 has a locked portion 350. In this embodiment, the locking portion 810 is, for example, a locking pin, and the locked portion 350 is a locked hole corresponding to the locking pin, but the invention is not limited to this. According to actual requirements, the locked hole may also be arranged on the positioning lock 800, and the locking pin may be arranged on the supporting foot 300, furthermore, the locking portion 810 and the locked portion 350 may be selectively latched to each other.

In detail, when the positioning lock 800 is in the locked position, the user can pivot the supporting foot 300 to the folded position along the pivot 360, such that the locking portion 810 and the locked portion 350 are latched to each other to lock the supporting foot 300. Preferably, at least one of the locking portion 810 and the locked portion 350 is formed with a guiding portion. In this embodiment, for example, the locking portion 810 has a guiding portion 812, and the guiding portion 812 is guiding inclined plane, moreover, the locking portion 810 and the locked portion 350 are abutted against and latched to each other through the guiding portion 812. When the supporting foot 300 is pushed by the user to the folded position, the upper end of the locked portion 350 may abut against the guiding portion 812 so as to pass over the locking portion 810 and then be latched with the locking portion 810. If the user wants to release the locked state of the supporting foot 300, he only needs to move the positioning lock 800 to the unlocked position along the direction opposite to the longitudinal direction L, such that the locking portion 810 is no longer latched with the locked portion 350, the supporting foot 300 can be unfolded in respect to the base 100, and then the supporting foot 300 can be slid to the position of the use state through the sliding member 400a.

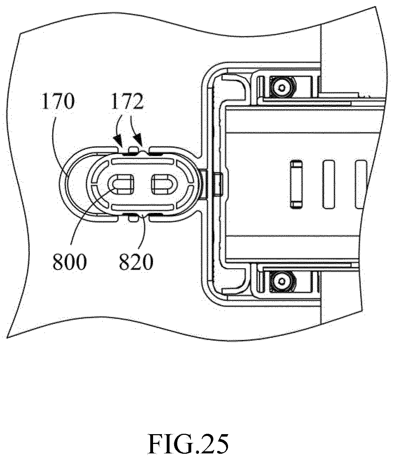

In addition, in order to let the user to surely know that the positioning lock 800 is currently in the locked position or the unlocked position, the positioning lock 800 in this embodiment can provide a touch feedback when the user performing switching between different positions. Please refer to Figs. 20 and 25 together, in which Fig. 25 is a partial enlarged schematic view of Fig. 19. As shown in Fig. 20, the positioning lock 800 further includes positioning protrusion 820, and the positioning protrusion 820 is, for example, an elastic body, and the base 100 further includes an accommodating seat 170, and notches 172 are formed on the accommodating seat 170, the positioning lock 800 is arranged in the accommodating seat 170, and the positioning protrusion 820 is selectively latched to the notches 172.

Specifically, the number of the notches 172 in this embodiment is, for example, four, and the four notches 172 are respectively formed on both sides of the accommodating seat 170. When the user wants to move the positioning lock 800 from the locked position to the unlocked position, or to move the positioning lock from the unlocked position to the locked position, the positioning protrusions 820 will abut against the wall surface of the accommodating seat 170, at this time, the user needs to strengthen force in moving, such that the positioning protrusion 820 goes over the wall surface and is latched to the other notch 172. With such arrangement, not only the positioning lock 800 will not be easily unlocked or locked accidentally due to external force interference, but also the user can know the current position of the positioning lock 800 through touch feedback during operation, thereby improving convenience in use.

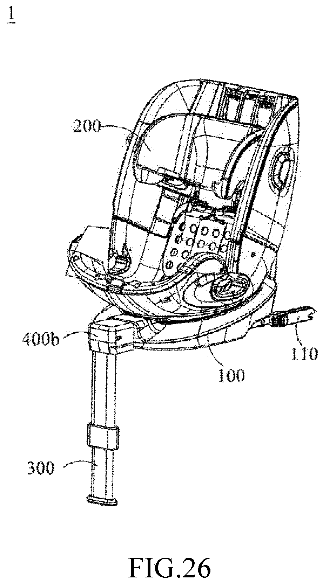

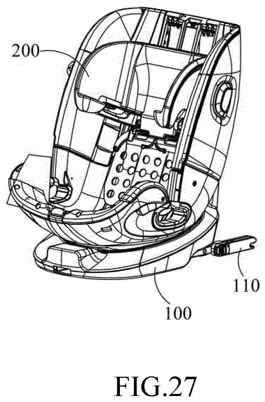

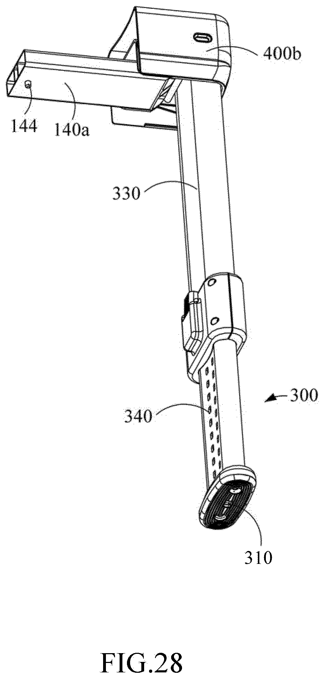

Please refer to Figs. 26 to 28, in which Fig. 26 is a schematic perspective view of a safety seat according to a sixth embodiment of the invention, Fig. 27 is a schematic perspective view of the base and the body of the safety seat in Fig. 26, and Fig. 28 is a schematic perspective view of the supporting foot, the casing, and the auxiliary bracket of the safety seat in Fig. 26. The safety seat 1 in this embodiment is similar to the safety seat 1 in the fourth embodiment, and the main difference between them is that the supporting foot 300 in this embodiment may be detached in respect to the base 100.

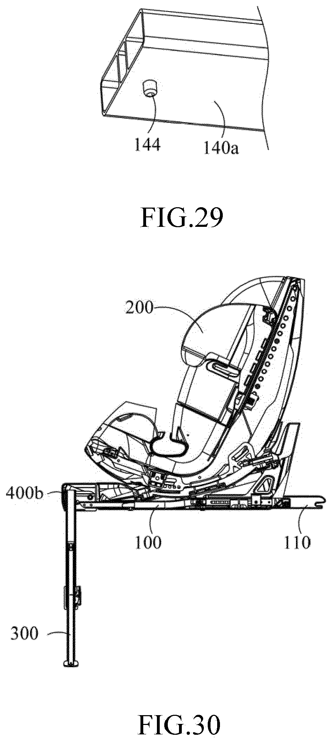

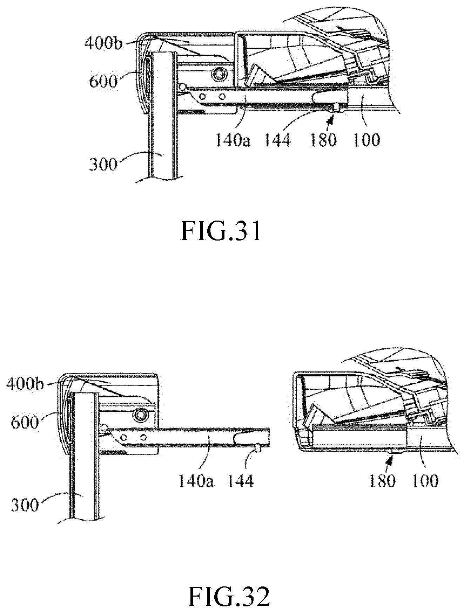

**In** detail, in order to provide flexibility for the user to detach the supporting foot 300 from the safety seat 1 when the supporting foot 300 is not in use, the base 100 in this embodiment and the supporting foot 300 may be selectively latched to each other. Please refer to Figs. 28 to 32 together, in which Fig. 29 is a partial enlarged schematic view of Fig. 28, Fig. 30 is a schematic right-side sectional view of the safety seat in Fig. 26, Fig. 31 is a partial enlarged schematic view of the safety seat in Fig. 30 when the auxiliary bracket is in a latched position, and Fig. 32 is a schematic view of the safety seat in Fig. 31 when the auxiliary bracket is unlatched from the base. Different from the safety seat 1 in the fourth embodiment, the safety seat 1 in this embodiment has no sliding member 400a, but includes a casing 400b and an auxiliary bracket 140a, and the casing 400b is arranged on an outer side of the base 100, and the supporting foot 300 is pivotally connected to the casing 400b; on the other hand, the auxiliary bracket 140a is slidably disposed on the base 100 and connected to the casing 400b. Thus, the casing 400b and the supporting foot 300 pivotally connected to the casing 400b can be slidably disposed on the base 100 through the auxiliary bracket 140a.

In addition, the auxiliary bracket 140a includes an operating member for latching 144, and the operating member for latching 144 is, for example, a button, and the base 100 is formed with a latching hole 180 and an opening. And the auxiliary bracket 140a is inserted into the opening. When the user slides the supporting foot 300 together with the auxiliary bracket 140 to the use position, the operating member for latching 144 will be latched in the latching hole 180, so the supporting foot 300 can be fixed in the use position and cannot slide freely. Moreover, when the user does not need to use the supporting foot 300, he can press the operating member for latching 144 to separate it from the latching hole 180, and at the same time the auxiliary bracket 140a and the casing 400b are slided toward the opening at the front end of the base 100. At this time, the auxiliary bracket 140a and the casing 400b can be completely separated from the base 100. In other words, through the operating member for latching 144 selectively latched to the latching hole 180, the supporting foot 300 can be detached from the base 100, providing the user with greater flexibility in use.

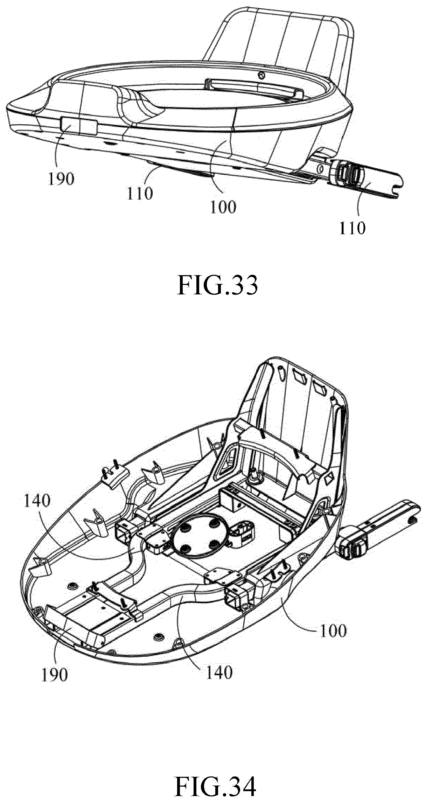

Please refer to Figs. 33 and 34, in which Fig. 33 is a schematic perspective view of the safety seat in Fig. 27 when a shielding member is moved to a shielding position, and Fig. 34 is a schematic view of internal components of the safety seat in Fig. 33. It would be noted, the safety seat 1 in this embodiment further includes a shielding member 190, and the shielding member 190 is pivotably connected to the base 100 and adjacent to the opening. For example, in this embodiment, the shielding member 190 is directly pivotally connected to the base 100. After the user detaches the supporting foot 300 from the base 100, in order to avoid defects on the appearance of the safety seat 1 due to exposure of the opening or prevent infants from accidentally inserting their fingers into the opening and being pinched, the user can pivot the shielding member 190 to a shielding position to make it cover the opening, so that the appearance integrity of the base 100 can be improved, and injuries to infants can be prevented.

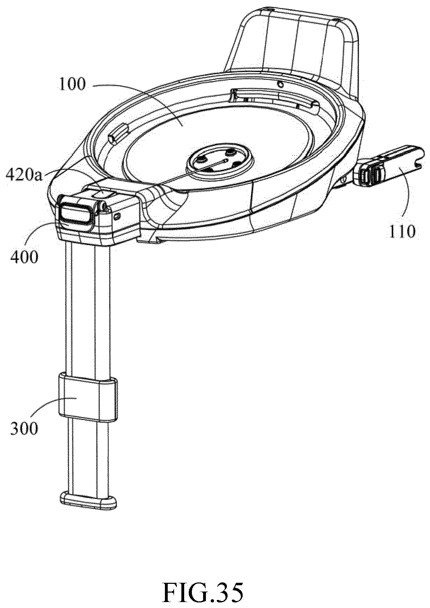

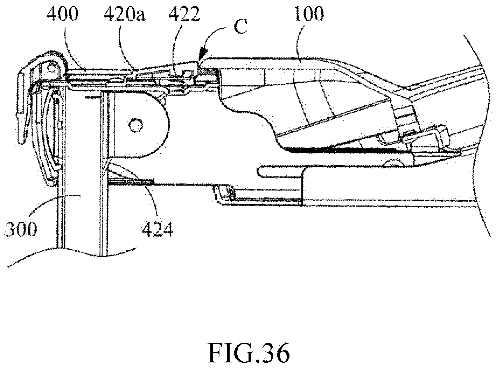

Please refer to Figs. 35 and 36, in which Fig. 35 is a schematic perspective view of internal components of the safety seat according to a seventh embodiment of the invention, and Fig. 36 is a schematic right-side sectional view of Fig. 35. The safety seat 1 in this embodiment is similar to the safety seat 1 in the first embodiment, and the main difference between them is that the safety seat 1 in this embodiment further includes a positioning portion 420a for locking the sliding member 400 and the supporting foot 300 in the unfolded position.

In detail, the positioning portion 420a in this embodiment is arranged on the sliding member 400 and can slide together with the sliding member 400 in respect to the base 100. As shown in Fig. 36, the safety seat 1 further includes a resilient member for positioning 422, and the resilient member for positioning 422 is, for example, a spring and is arranged between the positioning portion 420a and the sliding member 400. Therefore, during sliding process of the sliding member 400, the positioning portion 420a is subjected to an elastic force of the resilient member for positioning 422 and abuts against a lower edge of an upper wall surface of the base 100. When the sliding member 400 slides in respect to the base 100 to the unfolded position, a gap C is formed between the sliding member 400 and the base 100, and the positioning portion 420a will bounce into the gap C due to the elastic force of the resilient member for positioning 422, and is latched in the gap C and abuts against the sliding member 400 and the base 100 at the same time, such that the sliding member 400 and the supporting foot 300 are locked in the unfolded position. However, in other possible embodiments, the positioning portion 420a may also be arranged on the casing 400b as in the sixth embodiment, or the positioning portion 420a may only abut against one of the sliding member 400 and the base 100, or even the safety seat 1 does not include the resilient member for positioning 422, but instead uses an elastic material to make the positioning portion 420a to achieve a selective latching effect, which is not limited in the invention.

It would be noted, in this embodiment, the safety seat 1 further includes a resilient member for pivoting 424, and the resilient member for pivoting 424 is, for example, a torsion spring and is arranged between the supporting foot 300 and the sliding member 400. Thus, when the sliding member 400 slides in respect to the base 100 to the unfolded position, the supporting foot 300 will be automatically ejected from the sliding member 400 to the unfolded state by an elastic force of the resilient member for pivoting 424, which makes it more convenient for the user to use the safety seat 1.

Compared with the prior art, since the supporting foot 300 is slidably and pivotably connected to the base 100, when the safety seat 1 is not in use or it is not needed to use the supporting foot 300, and the supporting foot 300 can be pivoted and slidably folded in respect to the base 100, thereby achieving effects of improving flexibility of use, conforming to size-related specifications and reducing occupied volume.

The invention has been described above in conjunction with the best embodiment. However, the invention is by no means limited to the embodiments disclosed above, but should cover various modifications and equivalent combinations while remaining within the scope of the invention as claimed.

### Reference Signs List:

Safety seat: 1
Base: 100
Fixing portion: 110
Stopping portion: 120
Limiting member: 130
Bracket: 140
Auxiliary bracket: 140a
Limiting pin: 142
Operating member for latching: 144
Reinforcement member: 150
Auxiliary resilient member: 160
Accommodating seat: 170
Notch: 172
latching hole: 180
Shielding member: 190
Body: 200
Supporting foot: 300
Supporting portion: 310
Unlatching portion: 320
Sleeve portion: 330
Extending portion: 340
Abutting portion: 342
Locked portion: 350
Pivot: 360
Sliding member: 400, 400a
Casing: 400b
Body portion: 410
Sliding slot: 412, 412a
Positioning portion: 420, 420a
Resilient member for positioning: 422
Resilient member for pivoting: 424
Limiting pin: 430
Latching member: 500, 500a, 500b
Resilient member for latching: 510a, 510b
Pivot: 520b
Protective member: 600
Arc surface: 610
Stopping member: 700
Resilient member for stopping: 710
Long hole: 720
Positioning lock: 800
Locking portion: 810
Guiding Portion: 812
Positioning protrusion: 820
Gap: C
End: E
Longitudinal direction: L
Opening: O
Unlocking direction: R
Accommodating space: S
Section: X-X, Y-Y, Z-Z

## Claims

1. A safety seat (1), comprising:
a base (100) including a fixing portion (110), wherein the base (100) is adapted to be selectively fixed to a car seat through the fixing portion (110);
a body (200) assembled on the base (100); and
a supporting foot (300) pivotably connected to the base (100), wherein the supporting foot (300) and the fixing portion (110) are arranged on opposite sides of the base (100), respectively,
**characterized in that**
the supporting foot (300) is slidably connected to the base (100).

2. The safety seat (1) according to claim 1, **characterized in that** it further comprises a sliding member (400, 400a), wherein the sliding member (400, 400a) is slidably disposed on the base (100), and the supporting foot (300) is pivotally connected to the sliding member (400, 400a),
optionally wherein
the safety seat (1) further comprises a latching member (500, 500a, 500b), wherein the latching member (500, 500a, 500b) is pivotally connected to or slidably disposed on the base (100), the sliding member (400) includes a positioning portion (420, 420a), and the latching member (500, 500a, 500b) is selectively latched to the positioning portion (420, 420a).

3. The safety seat (1) according to claim 2, **characterized in that** the sliding member (400) is slidable in respect to the base (100) along a longitudinal direction (L), the supporting foot (300) is pivotally connected to a front end of the sliding member (400) in the longitudinal direction (L), and the latching member (500, 500a, 500b) and the positioning portion (420, 420a) are arranged at a rear end of the sliding member (400) in the longitudinal direction (L).

4. The safety seat (1) according to claim 2 or 3, **characterized in that** the supporting foot (300) includes an unlatching portion (320), and the latching member (500, 500a, 500b) is arranged on a pivoting path of the unlatching portion (320).

5. The safety seat (1) according to any of the claims 2 to 4, **characterized in that** it further comprises a resilient member for latching (510a, 510b), and the resilient member for latching (510a, 510b) is arranged between the latching member (500, 500a, 500b) and the base (100).

6. The safety seat (1) according to claim 2, optionally in combination with any of the claims 3 to 5, **characterized in that** it further comprises a protective member (600), and the protective member (600) is pivotally connected to the sliding member (400) and arranged between the supporting foot (300) and the sliding member (400), and/or
the base (100) includes at least one limiting member (130), the sliding member (400, 400a) is formed with at least one sliding slot (412, 412a), and the limiting member (130) is slidably disposed in the sliding slot (412, 412a); and/or
the sliding member (400, 400a) is formed with an opening (O), and a part of the supporting foot (300) is selectively accommodated in the sliding member (400, 400a) through the opening (O), and/or
the base (100) further includes a bracket (140), and the sliding member (400a) is slidably disposed on the bracket (140).

7. The safety seat (1) according to claim 6, **characterized in that** it further comprises an auxiliary resilient member (160), wherein the auxiliary resilient member (160) is connected to the base (100) and the sliding member (400a), and an extension direction of the auxiliary resilient member (160) is parallel to an extension direction of the bracket (140), and/or
the safety seat (1) further comprises a stopping member (700), and the stopping member (700) is slidably disposed on the sliding member (400a) and selectively abuts against the bracket (140).

8. The safety seat (1) according to claim 7, **characterized in that** it further comprises a resilient member for stopping (710), wherein the resilient member for stopping (710) is connected to the sliding member (400a) and the stopping member (700).

9. The safety seat (1) according to any of the claims 6 to 8, **characterized in that** it further comprises a reinforcement member (150), and the reinforcement member (150) is arranged between the bracket (140) and the sliding member (400a).

10. The safety seat (1) according to any of the preceding claims, **characterized in that** it further comprises a positioning lock (800), wherein the positioning lock (800) is arranged on the base (100) and includes a locking portion (810), the supporting foot (300) has a locked portion (350), and the locking portion (810) and the locked portion (350) are selectively latched to each other.

11. The safety seat (1) according to claim 10, **characterized in that** at least one of the locking portion (810) and the locked portion (350) is formed with a guiding portion (812), and the locking portion (810) and the locked portion (350) are abutted against and latched to each other through the guiding portion (812).

12. The safety seat (1) according to claim 10 or 11, **characterized in that** the base (100) includes an accommodating seat (170), notches (172) are formed on the accommodating seat (170), the positioning lock (800) is arranged in the accommodating seat (170) and is further formed with a positioning protrusion (820), and the positioning protrusion (820) is selectively latched to the notches (172),
optionally, the positioning protrusion (820) is an elastic body.

13. The safety seat (1) according to claim 2, optionally in combination with any of the claims 3 to 12, **characterized in that** it further comprises a positioning portion (420, 420a), wherein the positioning portion (420, 420a) is arranged on the sliding member (400), wherein, when the sliding member (400) slides in respect to the base (100) to an unfolded position, a gap (C) is formed between the sliding member (400) and the base (100), and the positioning portion (420, 420a) is selectively latched in the gap (C) and abuts against the sliding member (400) and/or the base (100).

14. The safety seat (1) according to claim 13, **characterized in that** it further comprises a resilient member for positioning (422), and the resilient member for positioning (422) is arranged between the positioning portion (420, 420a) and the sliding member (400).

15. The safety seat (1) according to claim 2, optionally in combination with any of the claims 3 to 14, **characterized in that** it further comprises a resilient member for pivoting (424), and the resilient member for pivoting (424) is arranged between the supporting foot (300) and the sliding member (400).

## Patentansprüche

1. Sicherheitssitz (1), umfassend:
eine Basis (100) mit einem Befestigungsteil (110), wobei die Basis (100) dazu ausgelegt ist, durch den Befestigungsteil (110) wahlweise an einem Autositz befestigt zu werden;
einen auf der Basis (100) montierten Körper (200); und
einen Stützfuß (300), der schwenkbar mit der Basis (100) verbunden ist, wobei der Stützfuß (300) und der Befestigungsteil (110) jeweils an gegenüberliegenden Seiten der Basis (100) angeordnet sind,
**dadurch gekennzeichnet, dass**
der Stützfuß (300) verschiebbar mit der Basis (100) verbunden ist.

2. Kindersitz (1) nach Anspruch 1, **dadurch gekennzeichnet, dass** er ferner ein Gleitelement (400, 400a) umfasst, wobei das Gleitelement (400, 400a) verschiebbar an der Basis (100) angeordnet ist und der Stützfuß (300) schwenkbar mit dem Gleitelement (400, 400a) verbunden ist,
optional, wobei
der Sicherheitssitz (1) ferner ein Verriegelungselement (500, 500a, 500b) umfasst, wobei das Verriegelungselement (500, 500a, 500b) schwenkbar mit der Basis (100) verbunden oder verschiebbar auf dieser angeordnet ist, das Gleitelement (400) einen Positionierungsteil (420, 420a) umfasst und das Verriegelungselement (500, 500a, 500b) wahlweise an dem Positionierungsteil (420, 420a) verriegelt ist.

3. Sicherheitssitz (1) nach Anspruch 2, **dadurch gekennzeichnet, dass** das Gleitelement (400) in Bezug auf die Basis (100) entlang einer Längsrichtung (L) verschiebbar ist, der Stützfuß (300) in Längsrichtung (L) schwenkbar mit einem vorderen Ende des Gleitelements (400) verbunden ist und das Verriegelungselement (500, 500a, 500b) und der Positionierungsteil (420, 420a) an einem hinteren Ende des Gleitelements (400) in Längsrichtung (L) angeordnet sind.

4. Sicherheitssitz (1) nach Anspruch 2 oder 3, **dadurch gekennzeichnet, dass** der Stützfuß (300) einen Entriegelungsteil (320) beinhaltet und das Verriegelungselement (500, 500a, 500b) auf einem Schwenkweg des Entriegelungsteils (320) angeordnet ist.

5. Sicherheitssitz (1) nach einem der Ansprüche 2 bis 4, **dadurch gekennzeichnet, dass** er außerdem ein elastisches Verriegelungselement (510a, 510b) umfasst, wobei das elastische Verriegelungselement (510a, 510b) zwischen dem Verriegelungselement (500, 500a, 500b) und der Basis (100) angeordnet ist.

6. Sicherheitssitz (1) nach Anspruch 2, optional in Verbindung mit einem der Ansprüche 3 bis 5, **dadurch gekennzeichnet, dass** er ferner ein Schutzelement (600) umfasst, wobei das Schutzelement (600) schwenkbar mit dem Gleitelement (400) verbunden und zwischen dem Stützfuß (300) und dem Gleitelement (400) angeordnet ist, und/oder
die Basis (100) mindestens ein Begrenzungselement (130) umfasst, das Gleitelement (400, 400a) mit mindestens einem Gleitschlitz (412, 412a) ausgebildet ist und das Begrenzungselement (130) gleitbar in dem Gleitschlitz (412, 412a) angeordnet ist; und/oder
das Gleitelement (400, 400a) mit einer Öffnung (O) versehen ist und ein Teil des Stützfußes (300) wahlweise durch die Öffnung (O) in das Gleitelement (400, 400a) aufgenommen wird, und/oder
die Basis (100) umfasst ferner eine Halterung (140), und das Gleitelement (400a) ist verschiebbar auf der Halterung (140) angeordnet.

7. Sicherheitssitz (1) nach Anspruch 6, **dadurch gekennzeichnet, dass** er ferner ein elastisches Hilfselement (160) umfasst, wobei das elastische Hilfselement (160) mit der Basis (100) und dem Gleitelement (400a) verbunden ist und eine Erstreckungsrichtung des elastischen Hilfselements (160) parallel zu einer Erstreckungsrichtung der Halterung (140) verläuft und/oder
der Sicherheitssitz (1) ferner ein Anschlagelement (700) umfasst, wobei das Anschlagelement (700) verschiebbar an dem Gleitelement (400a) angeordnet ist und wahlweise an der Halterung (140) anliegt.

8. Sicherheitssitz (1) nach Anspruch 7, **dadurch gekennzeichnet, dass** es ferner ein elastisches Anschlagelement (710) umfasst, wobei das elastische Anschlagelement (710) mit dem Gleitelement (400a) und dem Anschlagelement (700) verbunden ist.

9. Sicherheitssitz (1) nach einem der Ansprüche 6 bis 8, **dadurch gekennzeichnet, dass** er ferner ein Verstärkungselement (150) umfasst und das Verstärkungselement (150) zwischen der Halterung (140) und dem Gleitelement (400a) angeordnet ist.

10. Sicherheitssitz (1) nach einem der vorhergehenden Ansprüche, **dadurch gekennzeichnet, dass** er ferner eine Positionierungssperre (800) umfasst, wobei die Positionierungssperre (800) an der Basis (100) angeordnet ist und einen Verriegelungsteil (810) umfasst, der Stützfuß (300) einen Verriegelungsteil (350) aufweist und der Verriegelungsteil (810) und der Verriegelungsteil (350) wahlweise miteinander verriegelt sind.

11. Sicherheitssitz (1) nach Anspruch 10, **dadurch gekennzeichnet, dass** mindestens einer aus dem Verriegelungsteil (810) und dem verriegelten Teil (350) mit einem Führungsteil (812) ausgebildet ist, und der Verriegelungsteil (810) und der verriegelte Teil (350) aneinander anliegen und durch den Führungsteil (812) miteinander verriegelt sind.

12. Sicherheitssitz (1) nach Anspruch 10 oder 11, **dadurch gekennzeichnet, dass** die Basis (100) einen Aufnahmesitz (170) umfasst, an dem Aufnahmesitz (170) Kerben (172) ausgebildet sind, die Positionierungssperre (800) in dem Aufnahmesitz (170) angeordnet und ferner mit einem Positionierungsvorsprung (820) ausgebildet ist, und der Positionierungsvorsprung (820) wahlweise in die Kerben (172) einrastet,
vorzugsweise ist der Positionierungsvorsprung (820) ein elastischer Körper.

13. Sicherheitssitz (1) gemäß Anspruch 2, optional in Verbindung mit einem der Ansprüche 3 bis 12, **dadurch gekennzeichnet, dass** er ferner einen Positionierungsteil (420, 420a) umfasst, wobei der Positionierungsteil (420, 420a) an dem Gleitelement (400) angeordnet ist, wobei, wenn das Gleitelement (400) in Bezug auf die Basis (100) in eine ausgeklappte Position gleitet, ein Spalt (C) zwischen dem Gleitelement (400) und der Basis (100) gebildet wird und der Positionierungsteil (420, 420a) wahlweise in dem Spalt (C) verriegelt wird und an dem Gleitelement (400) und/oder der Basis (100) anliegt.

14. Sicherheitssitz (1) nach Anspruch 13, **dadurch gekennzeichnet, dass** er ferner ein elastisches Positionierungselement (422) umfasst und das elastische Positionierungselement (422) zwischen dem Positionierungsteil (420, 420a) und dem Gleitelement (400) angeordnet ist.

15. Sicherheitssitz (1) nach Anspruch 2, optional in Verbindung mit einem der Ansprüche 3 bis 14, **dadurch gekennzeichnet, dass** er ferner ein elastisches Schwenkelement (424) umfasst und das elastische Schwenkelement (424) zwischen dem Stützfuß (300) und dem Gleitelement (400) angeordnet ist.

## Revendications

1. Siège de sécurité (1), comprenant :
une base (100) qui inclut une partie de fixation (110), dans lequel la base (100) est adaptée pour être fixée de façon sélective à un siège de voiture par l'intermédiaire de la partie de fixation (110) ;
un corps (200) qui est assemblé sur la base (100) ; et
un pied de support (300) qui est connecté de façon pivotante à la base (100), dans lequel le pied de support (300) et la partie de fixation (110) sont respectivement agencés sur des côtés opposés de la base (100),
**caractérisé en ce que** :
le pied de support (300) est connecté de façon coulissante à la base (100).

2. Siège de sécurité (1) selon la revendication 1, **caractérisé en ce qu'**il comprend en outre un élément de coulissement (400, 400a), dans lequel l'élément de coulissement (400, 400a) est disposé de façon coulissante sur la base (100), et le pied de support (300) est connecté de façon pivotante à l'élément de coulissement (400, 400a),
en option dans lequel :
le siège de sécurité (1) comprend en outre un élément de verrouillage (500, 500a, 500b), dans lequel l'élément de verrouillage (500, 500a, 500b) est connecté de façon pivotante à la base (100) ou est disposé de façon coulissante sur cette même base, l'élément de coulissement (400) inclut une partie de positionnement (420, 420a), et l'élément de verrouillage (500, 500a, 500b) est verrouillé de façon sélective sur la partie de positionnement (420, 420a).

3. Siège de sécurité (1) selon la revendication 2, **caractérisé en ce que** l'élément de coulissement (400) peut coulisser par rapport à la base (100) suivant une direction longitudinale (L), le pied de support (300) est connecté de façon pivotante à une extrémité avant de l'élément de coulissement (400) dans la direction longitudinale (L), et l'élément de verrouillage (500, 500a, 500b) et la partie de positionnement (420, 420a) sont positionnés au niveau d'une extrémité arrière de l'élément de coulissement (400) dans la direction longitudinale (L).

4. Siège de sécurité (1) selon la revendication 2 ou 3, **caractérisé en ce que** le pied de support (300) inclut une partie de déverrouillage (320), et l'élément de verrouillage (500, 500a, 500b) est agencé sur une trajectoire de pivotement de la partie de déverrouillage (320).

5. Siège de sécurité (1) selon l'une quelconque des revendications 2 à 4, **caractérisé en ce qu'**il comprend en outre un élément élastique pour le verrouillage (510a, 510b), et l'élément élastique pour le verrouillage (510a, 510b) est agencé entre l'élément de verrouillage (500, 500a, 500b) et la base (100).

6. Siège de sécurité (1) selon la revendication 2, en option en combinaison avec l'une quelconque des revendications 3 à 5, **caractérisé en ce qu'**il comprend en outre un élément de protection (600), et l'élément de protection (600) est connecté de façon pivotante à l'élément de coulissement (400) et est agencé entre le pied de support (300) et l'élément de coulissement (400) ; et/ou
la base (100) inclut au moins un élément de limitation (130), l'élément de coulissement (400, 400a) est formé de manière à comporter au moins une fente de coulissement (412, 412a), et l'élément de limitation (130) est disposé de façon coulissante dans la fente de coulissement (412, 412a) ; et/ou
l'élément de coulissement (400, 400a) est formé de manière à comporter une ouverture (O), et une partie du pied de support (300) est logée de façon sélective dans l'élément de coulissement (400, 400a) au travers de l'ouverture (O) ; et/ou
la base (100) inclut en outre une console (140), et l'élément de coulissement (400a) est disposé de façon coulissante sur la console (140).

7. Siège de sécurité (1) selon la revendication 6, **caractérisé en ce qu'**il comprend en outre un élément élastique auxiliaire (160), dans lequel l'élément élastique auxiliaire (160) est connecté à la base (100) et à l'élément de coulissement (400a), et une direction d'extension de l'élément élastique auxiliaire (160) est parallèle à une direction d'extension de la console (140) ; et/ou
le siège de sécurité (1) comprend en outre un élément d'arrêt (700), et l'élément d'arrêt (700) est disposé de façon coulissante sur l'élément de coulissement (400a) et vient en butée de façon sélective contre la console (140).

8. Siège de sécurité (1) selon la revendication 7, **caractérisé en ce qu'**il comprend en outre un élément élastique pour l'arrêt (710), dans lequel l'élément élastique pour l'arrêt (710) est connecté à l'élément de coulissement (400a) et à l'élément d'arrêt (700).

9. Siège de sécurité (1) selon l'une quelconque des revendications 6 à 8, **caractérisé en ce qu'**il comprend en outre un élément de renforcement (150), et l'élément de renforcement (150) est agencé entre la console (140) et l'élément de coulissement (400a).

10. Siège de sécurité (1) selon l'une quelconque des revendications précédentes, **caractérisé en ce qu'**il comprend en outre un élément de blocage de positionnement (800), dans lequel l'élément de blocage de positionnement (800) est agencé sur la base (100) et inclut une partie de blocage (810), le pied de support (300) comporte une partie bloquée (350), et la partie de blocage (810) et la partie bloquée (350) sont verrouillées de façon sélective l'une sur l'autre.

11. Siège de sécurité (1) selon la revendication 10, **caractérisé en ce qu'**au moins une partie parmi la partie de blocage (810) et la partie bloquée (350) est formée de manière à comporter une partie de guidage (812), et la partie de blocage (810) et la partie bloquée (350) viennent en butée l'une contre l'autre et sont verrouillées l'une sur l'autre par l'intermédiaire de la partie de guidage (812).

12. Siège de sécurité (1) selon la revendication 10 ou 11, **caractérisé en ce que** la base (100) inclut un siège de logement (170), des encoches (172) sont formées sur le siège de logement (170), l'élément de blocage de positionnement (800) est agencé dans le siège de logement (170) et est en outre formé de manière à comporter une protubérance de positionnement (820), et la protubérance de positionnement (820) est verrouillée de façon sélective sur les encoches (172),
en option, la protubérance de positionnement (820) est un corps élastique.

13. Siège de sécurité (1) selon la revendication 2, en option en combinaison avec l'une quelconque des revendications 3 à 12, **caractérisé en ce qu'**il comprend en outre une partie de positionnement (420, 420a), dans lequel la partie de positionnement (420, 420a) est agencée sur l'élément de coulissement (400), dans lequel, lorsque l'élément de coulissement (400) coulisse par rapport à la base (100) jusqu'à une position déployée, un espace (C) est formé entre l'élément de coulissement (400) et la base (100), et la partie de positionnement (420, 420a) est verrouillée de façon sélective dans l'espace (C) et vient en butée contre l'élément de coulissement (400) et/ou la base (100).

14. Siège de sécurité (1) selon la revendication 13, **caractérisé en ce qu'**il comprend en outre un élément élastique pour le positionnement (422), et l'élément élastique pour le positionnement (422) est agencé entre la partie de positionnement (420, 420a) et l'élément de coulissement (400).

15. Siège de sécurité (1) selon la revendication 2, en option en combinaison avec l'une quelconque des revendications 3 à 14, **caractérisé en ce qu'**il comprend en outre un élément élastique pour le pivotement (424), et l'élément élastique pour le pivotement (424) est agencé entre le pied de support (300) et l'élément de coulissement (400).
